# EUROPÄISCHE PATENTANMELDUNG

(11) **EP 1 032 160 A2**
(43) Veröffentlichungstag der Anmeldung: **30.08.2000**
(21) Anmeldenummer: 00101920.7
(22) Anmeldetag: 01.02.2000
(51) Int. Cl.: H04L 12/12, H04L 12/40

(54) **Einrichtung für einen Datenbus**

(30) Priorität: 06.02.1999 DE 19904878
(71) Anmelder: Merten GmbH & Co. KG, 51674 Wiehl (DE)
(72) Erfinder: Herrmann, Bernd Peter, Dipl.-Ing., 51643 Gummersbach (DE)
(74) Vertreter: Selting, Günther, Dipl.-Ing.

(57) **Zusammenfassung**

Die Erfindung bezieht sich auf eine Einrichtung für den Betrieb eines Datenbusses mit anschließbaren Busteilnehmern (BT) und einem Busnetzteil (SN) zur Stromversorgung der Busteilnehmer und zur Erzeugung der Betriebsspannung des Datenbusses. Um den Datenbus von der Betriebsspannung und die angeschlossenen Busteilnehmer (BT) von der Stromversorgung zu trennen, wenn für eine gewisse Zeit Betriebsruhe auf dem Datenbus herrscht, sind Mittel (BR) zum Erkennen der Betriebsruhe, Mittel (AU) zum Abschalten des Busnetzteiles in Abhängigkeit von der Dauer der Betriebsruhe, Mittel (EI) zum Einschalten des Busnetzteiles durch ein 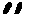 Aufweck"-Signal eines Busteilnehmers (BT) und Mittel zur Aufrechterhaltung eines 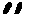 Schlaf-Modus" wenigstens eines Busteilnehmers bei abgeschaltetem Busnetzteil (SN) vorgesehen, wobei der Busteilnehmer eine busnetzteilunabhängige Energiequelle (Q) und eine von dieser Energiequelle gespeiste Schaltung (AM) zum Erkennen einer Busteilnehmeraktivierung sowie Mittel zur Erzeugung des 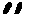 Aufweck"-Signals auf der Grundlage der Aktivierungsinformation und Mittel (MS) zum Senden des 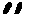 Aufweck"-Signals an das Busnetzteil enthält. Der Vorteil der Erfindung besteht darin, daß in Zeiten der Betriebsruhe auf dem Datenbus der Stromverbrauch drastisch reduziert und keine elektromagnetische Strahlung erzeugt wird.

## Beschreibung

Die Erfindung bezieht sich auf eine Einrichtung für einen Datenbus mit anschließbaren Busteilnehmern und einem abschaltbaren Busnetzteil zur Stromversorgung der Busteilnehmer und zur Erzeugung der Betriebsspannung des Datenbusses.

Die EP-PS 0 344 609 B1 beschreibt ein digitales Datenbussystem für die Hausleittechnik, mit dem Datentelegramme zwischen verschiedenen im Gebäude installierten Busteilnehmern übertragen werden. Die Datenübertragung erfolgt zum Zwecke des Schaltens, Steuerns, Regelns, Messens und/oder Überwachens. Jeder Busteilnehmer besteht aus einem funktionsunabhängigen Busankoppler und einem gerätespezifischen Anwendungsmodul wie Sensor oder Aktor, mit denen die Kommunikation mit anderen Busteilnehmern erfolgt. Die Busankoppler sind hardwaremäßig untereinander gleich aufgebaut, so daß bei der Installation des Systems an jeder Anschlußstelle zunächst nur ein Busankoppler, der einen Mikroprozessor enthält, zu installieren ist. Der Busankoppler kann ein Datentelegramm erzeugen, senden, empfangen und auswerten, er ist programmierbar für Quellen- und Zieladressen, so daß ein Datentelegramm an eine Zieladresse gesendet und von einer Quellenadresse empfangen werden kann.

Der Busankoppler wird mit dem funktionsspezifischen Anwendungsmodul verbunden, der den Busteilnehmer komplettiert und ihm dasjenige Verhalten vermittelt, das für die Kommunikation mit weiteren Busteilnehmern erforderlich ist.

Bei dem bekannten Bussystem ist eine zentrale Stromversorgung vorhanden, welche die Busteilnehmer speist und die zur Erzeugung der Betriebsspannung des Busses dient.

Das bekannte Bussystem wird durch die zentrale Stromversorgung ständig mit Energie versorgt, auch dann, wenn kein Datenverkehr auf dem Bus stattfindet. Dadurch ist die Stromaufnahme auch während der Betriebsruhe auf dem Bus maximal, und während dieser Zeit hält die Abstrahlung elektromagnetischer Energie in die Umwelt an (Elektrosmog).

Die Aufgabe der Erfindung besteht darin, den Energieverbrauch des Datenbusses und der über die Stromversorgung des Datenbusses gespeisten Busteilnehmer zu reduzieren.

Die Aufgabe der Erfindung wird durch die in Anspruch 1 aufgeführten Maßnahmen gelöst. Weiterbildungen der Erfindung sind in den Unteransprüchen beschrieben.

Der Vorteil der Erfindung besteht darin, daß mit einem begrenzten Energievorrat für eine maximale Zeit ein Busbetrieb aufrechterhalten werden kann oder die Betriebskosten des Datenbusses minimiert werden können.

Grundsätzlich kann der Datenbus einschließlich seiner Busteilnehmer bei Betriebsruhe ausgeschaltet sein, d.h. wenn kein Datenverkehr auf dem Datenbus herrscht. Der Stromverbrauch ist dann Null und eine mögliche Strahlenquelle ausgeschaltet. Dieser Fall ist jedoch in der Regel nur bei feststehenden Zeiten der Betriebsruhe möglich, z.B. bei Nacht. Das Einschalten kann dann nach Ablauf der feststehenden Betriebsruhe, z.B. morgens automatisch oder manuell erfolgen.

Erfindungsgemäß soll der Datenbus bei jeder länger oder kürzer andauernden Betriebsruhe automatisch ausgeschaltet werden, jedoch soll stets eine reduzierte Betriebsbereitschaft des Datenbusses aufrechterhalten werden, wenn kein Datenverkehr stattfindet. Die normale Betriebsbereitschaft soll automatisch und ohne Datenverlust wieder herstellbar sein, wenn Datenverkehr einsetzt.

Zeiten der Betriebsruhe auf dem Datenbus treten unregelmäßig auf und sind in ihrer Dauer unterschiedlich. Wenn für eine gewisse Zeit, beispielsweise nach Ablauf von Sekunden oder Minuten kein Datenverkehr auf dem Bus stattgefunden hat, kann daraus gefolgert werden, daß die Betriebsruhe auch weiterhin für eine gewisse Zeit andauert. Erst dann soll die normale Betriebsbereitschaft durch Abschaltung des Datenbusses samt seiner betriebsbedingten Busteilnehmer reduziert werden. Hierfür wird der Datenverkehr auf dem Bus während der normalen Betriebsbereitschaft durch geeignete Mittel überwacht. Betriebsruhe tritt im Sinne der Erfindung also erst ein, wenn nach Beendigung einer Datenübertragung auf dem Bus und Ablauf einer festgelegten Datenpause keine neue Datenübertragung stattgefunden hat. Zur Feststellung der Betriebsruhe kann eine an die Übertragungsstrecke des Datenbusses angeschlossene Einrichtung zur Überwachung des Datenverkehrs dienen. Diese Überwachungseinrichtung ist in der Lage, den gesamten Datenverkehr zu empfangen. Eine Auswertung des Datenverkehrs kann mit Hilfe eines Zeitgliedes erfolgen, daß nach Beendigung einer Datenübertragung angesteuert wird und nur dann eine verwertbare Information erzeugt, wenn nach Ablauf der eingestellten Zeitspanne keine neue Datenübertragung begonnen hat.

Ist die eingestellte Zeit des Zeitgliedes abgelaufen, kann über eine Ausschalteinrichtung ein Steuersignal an einen Schalter, vorzugsweise elektronischen Schalter mit einem Schalttransistor abgegeben werden, der das Busnetzteil vom Datenbus trennt. Die von der Speisung dieses Busnetzteiles abhängigen Verbraucher sind damit inaktiv.

Wenigstens ein, vorteilhaft alle Busteilnehmer, im besonderen aber die als Sensoren wirkenden Busteilnehmer wie Schalter, Taster, Funktionsgeber, Überwachungsgeräte und dgl. werden nach dem Abschalten des Datenbusses von der Stromversorgung durch einen 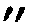 Schlaf-Modus" aktiv gehalten. Hierfür ist der wenigstens eine oder es sind alle Busteilnehmer oder es sind die als Sensoren wirkenden Busteilnehmer mit je einer 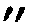 Schlaf-Modus" Schaltungsanordnung ausgestattet, die von einer netzteilunabhängigen Energiequelle, vorzugsweise aufladbaren Batterie gespeist wird. Für einen solchen Datenbus, bei dem die Busteilnehmer einen Busankoppler mit einem Mikroprozessor enthalten, kann die reduzierte Betriebsbereitschaft durch eine 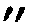 Schlaf-Modus"-Betriebsstufe des Mikroprozessors erzeugt werden. Vorteilhaft hat jeder Busteilnehmer mit 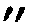 Schlaf-Modus"-Schaltung eine aufladbare Batterie. Die Aufladung der Batterie kann durch die Betriebsspannung des Datenbusses erfolgen. Hierfür sind Mittel zur Ladungsüberwachung und Aufladung der Batterie im Busteilnehmer vorhanden.

Während der Betriebsruhe des Datenbusses sind nicht nur die daran angeschlossenen Busteilnehmer vom Busnetzteil getrennt, sondern auch die Betriebsspannung des Datenbusses ist abgeschaltet. Die 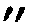 Schlaf-Modus"-Schaltung hält den oder die betreffenden Busteilnehmer in Aktionsbereitschaft. Sie erkennt, wenn der Busteilnehmer durch einen externen Befehl aktiviert wird. Dieser Aktivierungsbefehl kann durch Betätigung einer Befehlstaste, eines externen Schalt- oder Steuergerätes, beispielsweise in Abhängigkeit von Druck, Temperatur, Licht oder einer anderen Strahlungsquelle wie Infrarotstrahlungsquelle erzeugt werden. Diese Aktivierungsinformation löst ein 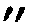 Aufweck"-Signal des Busteilnehmers aus. Dieses 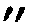 Aufweck"-Signal kann beispielsweise durch eine Kondensatorentladung erzeugt und als Impuls auf dem Bus bei ausgeschaltetem Busnetzteil übertragen werden. Für den Empfang des 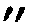 Aufweck"-Signals ist eine Einrichtung zur Überwachung der Betriebsruhe auf dem Datenbus vorgesehen, die über eine Einschalteinrichtung des Busnetzteiles die empfangene Information als Schaltsignal zum Einschalten das Busnetzteil verarbeitet. Bei einem Zweileiter-Bus kann das 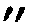 Aufweck-Signal" auf der Busleitung übertragen werden. In diesem Fall kann beispielsweise das 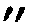 Aufweck-Signal" eine der Bus-Betriebsspannung entgegengesetzte Polarität haben, so daß sichergestellt ist, daß das 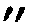 Aufweck-Signal" nicht durch die Busteilnehmer 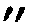 verschluckt" wird.

Die Mittel zur Überwachung des Datenverkehrs und zur Erkennung der Betriebsruhe auf dem Datenbus, die Mittel zur Überwachung der Betriebsruhe und zum Empfang des 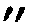 Aufweck"-Signals, die Mittel zum Ein- und Ausschalten des Busnetzteiles sind Bestandteile eines Powermanagers. Der Powermanager ist vorteilhaft im schaltbaren Busnetzteil enthalten.

Mit dem Powermanager wird die Überwachung des Datenverkehrs auf dem Bus durchgeführt, mit dem bei Betriebsruhe das Busnetzteil abgeschaltet wird. Ferner erfolgt die Überwachung des abgeschalteten Busses, so daß bei Empfang des 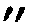 Aufweck-Signals" die Einschaltung des Busnetzteiles erfolgt.

Nachfolgend ist anhand der Zeichnungen ein Ausführungsbeispiel der Erfindung näher beschrieben.

Es zeigen:
- FIG.1: das Blockschaltbild eines Datenbusses, mit angeschlossenen Busteilnehmern,
- FIG.2: das Blockschaltbild des Busmanagers mit schaltbarem Busnetzteil,
- FIG.3: das Blockschaltbild eines Busteilnehmers.

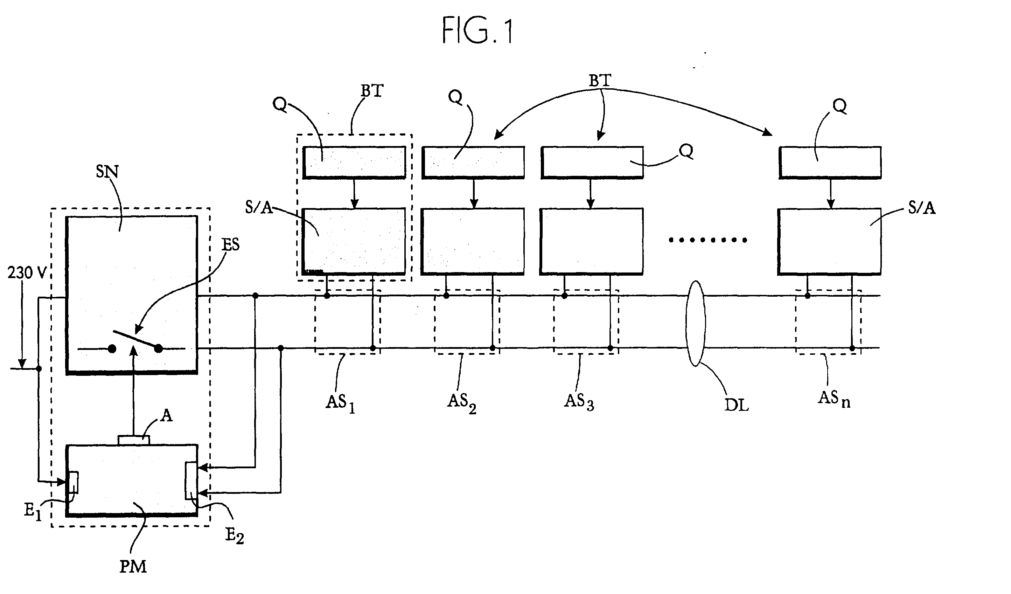

In Figur 1 ist ein Zweileiterdatenbus mit Datenleitungen DL dargestellt, an denen über Anschlußstellen AS₁, AS₂ ... ASₙ Busteilnehmer BT anschließbar sind. Busteilnehmer sind Sensoren und Aktoren. Für den Anschluß können Anschlußdosen vorgesehen sein. Hierzu wird auf das Europäische Patent 436 804 verwiesen, das vorteilhafte Beispiele für den Anschluß von Busteilnehmern BT an die Datenleitungen DL zeigt. Für die Bereitstellung der Betriebsspannung des Datenbusses und zur Stromversorgung der Busteilnehmer BT ist ein abschaltbares Busnetzteil SN vorgesehen, das von einem Stromversorgungsnetz, beispielsweise Wechselspannungsnetz 230 Volt gespeist wird und ausgangsseitig an die Datenleitungen DL angeschlossen ist. Das abschaltbare Busnetzteil SN enthält einen elektronischen Schalter ES der die Betriebsspannung des Datenbusses ein- und ausschaltet und die Stromversorgung für die Busteilnehmer BT öffnet und sperrt.

Der elektronische Schalter ES wird durch den Powermanager PM gesteuert. Dieser besitzt einen Steuerausgang A für den elektronischen Schalter ES, einen Eingang E₁ zur Speisung aus dem Stromnetz und einen Steuer-Eingang E₂, mit dem der Powermanager PM an die Datenleitung DL angeschlossen ist.

Der Powermanager PM ist in der Lage den Datenverkehr auf dem Bus auf Phasen der Betriebsruhe zu überwachen und bei Eintritt einer Betriebsruhephase ein Ausschaltsignal zu erzeugen, mit dem über den Ausgang A der elektronische Schalter ES geöffnet und der Datenbus elektrisch vom Busnetzteil getrennt wird, so daß sowohl die Betriebsspannung als auch die Stromversorgung der Busteilnehmer BT unterbrochen sind. Dieser Zustand ist durch eine reduzierte Betriebsbereitschaft gekennzeichnet, wie nachfolgend noch näher ausgeführt wird. Der Powermanager PM ist ferner in der Lage, ein 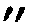 Aufweck"-Signal zu erkennen, das ein Busteilnehmer BT über die Busleitung DL sendet, wenn dieser aktiviert wird, beispielsweise wenn ein Schalter betätigt wird. Das 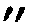 Aufweck"-Signal veranlaßt über den Ausgang A ein Schließen des elektronischen Schalters ES, so daß das Busnetzteil SN eingeschaltet und der Datenbus wieder in seiner normalen Betriebsbereitschaft zurückkehrt. Das Busnetzteil SN und der Powermanager PM sind baueinheitlich ausgeführt und in einem gemeinsamen Gehäuse eingebaut.

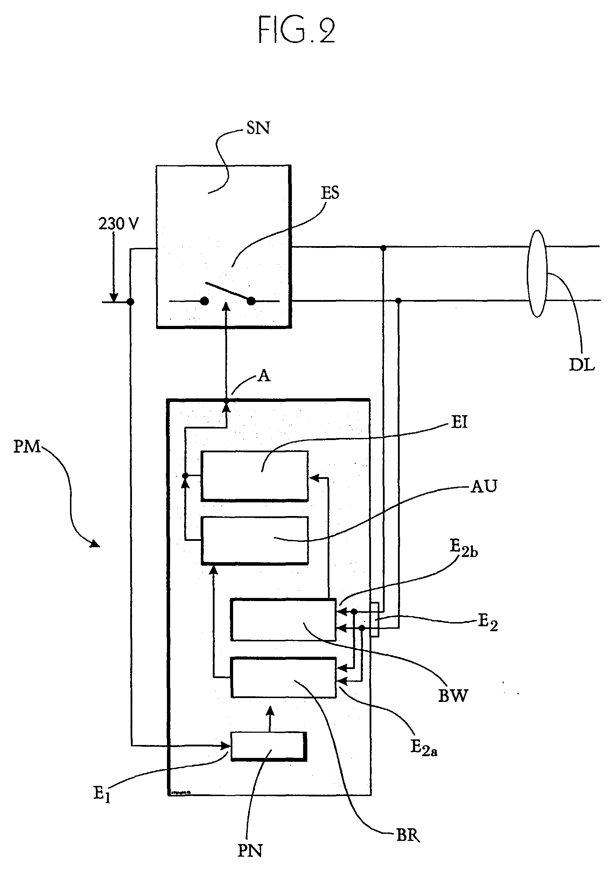

Die Figur 2 zeigt schematisch den Aufbau des Powermanagers PM in Verbindung mit dem schaltbaren Busnetzteil SN.

Der Eingang E₂ des Powermanagers PM ist über den internen Eingang E₂ₐ an eine Überwachungseinrichtung BR zur Überwachung des Datenverkehrs auf dem Bus gelegt. Die Überwachungseinrichtung BR erkennt den Zustand der Betriebsruhe auf dem Datenbus. Tritt dieser Zustand ein, dann wird die Ausschaltstufe AU aktiviert, die ein Ausschaltsignal erzeugt, das über den Ausgang A den elektronischen Schalter ES ansteuert, der das Busnetzteil SN abschaltet.

Der Powermanager PW enthält ferner eine Überwachungseinrichtung BW, die den Zustand der Betriebsruhe auf dem Datenbus überwacht. Diese Überwachungseinrichtung BW ist über den internen Eingang E_{2b} an den Eingang E₂ der Datenleitung DL angeschlossen und ist auf den Empfang eines 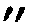 Aufweck"-Signals sensibilisiert, das ein Busteilnehmer BT aussendet, wenn er aktiviert worden ist. Empfängt die Überwachungseinrichtung BW ein solches 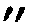 Aufweck"-Signal, wird eine Einschaltstufe EI des Powermanagers PW aktiviert, die ein Einschaltsignal erzeugt, das über den Ausgang A den elektronischen Schalter ES ansteuert, der das ausgeschaltete Busnetzteil SN einschaltet, so daß der normale Betriebszustand auf dem Bus wieder hergestellt ist. Der Powermanager PM enthält eine vom Stromversorgungsnetz 230 V gespeiste Hilfsstromquelle PN zur Erzeugung einer Hilfsspannung für den Powermanager PM. Die Hilfsspannung für den Powermanager PM wird beim Abschalten des Datenbusses nicht unterbrochen. Die Hilfsstromquelle PN ist über den Eingang E₁ an das Stromversorgungsnetz 230 V angeschlossen.

Der Datenbus ist also wie beschrieben aus dem normalen Betriebsmodus in einen 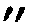 Schlaf-Modus" steuerbar, wobei für die Busteilnehmer BT eine busnetzteilunabhängige Energiequelle Q bereitgestellt ist, die soviel Energie liefert, um das bereits genannte 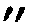 Aufweck"-Signal zu erzeugen und auf der Datenleitung DL an den Powermanager PM des schaltbaren Busnetzteiles SN zu senden.

Zur Aufrechterhaltung des 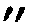 Schlaf-Modus" enthält jeder Busteilnehmer BT eine busnetzteilunabhängige Energiequelle Q, z.B. in Form einer Batterie.

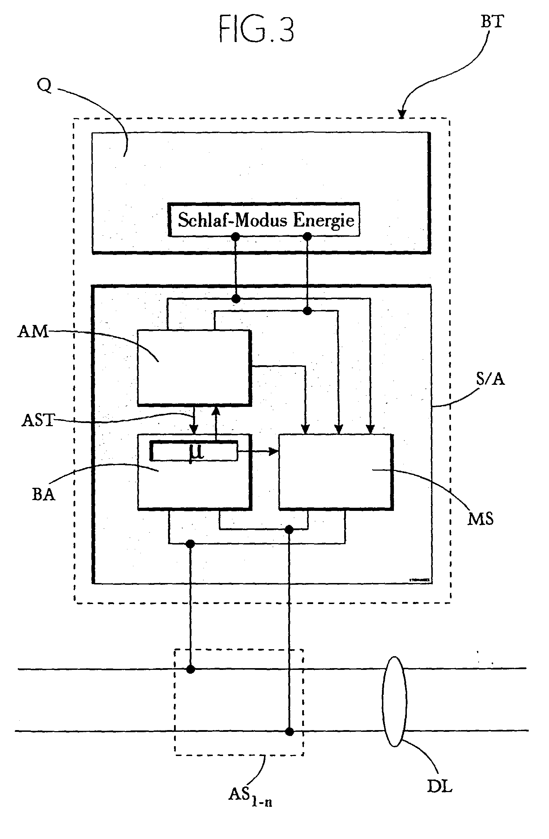

In Figur 3 ist schematisch ein Busteilnehmer BT dargestellt, der über die Energiequelle Q mit 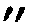 Schlaf-Modus" Energie versorgt wird. Ein derartiger Busteilnehmer BT, bei dem es sich um einen Sensor oder Aktor oder ein anderes externes busfähiges Gerät S/A handelt, enthält eine spezielle Sensor- oder Aktorfunktion, wie Schalt-, Steuer-, Regel- oder Anzeigeeinrichtung AM, die über eine Datenverbindung AST mit einem Busankoppler BA verbunden ist. Die Funktionen AM und BA können als separate Module ausgeführt und zusammenfügbar oder baueinheitlich ausgeführt sein. Der Busankoppler BA enthält einen Mikroprozessor und ermöglicht einen dezentralen Betrieb des Datenbusses.

Ein derartiger Busteilnehmer BT enthält außer den Funktionen AM und BA noch eine 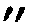 Schlaf-Modus" Steuerung MS zum Senden des 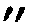 Aufweck"-Signals und zur Ladungsüberwachung und Aufladung der Energiequelle Q. Das 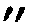 Aufweck"-Signal hat im Ausführungsbeispiel eine gegenüber der vom Busnetzteil SN gelieferten Busbetriebsspannung entgegengesetzte Polarität, um die Störsicherheit zu verbessern.

Die funktionsspezifischen Sensor/Aktor Einrichtungen AM der Busteilnehmer BT werden im Betriebs zustand 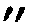 Schlaf Modus" durch die Energiequelle Q gespeist, so daß die Aktivierung der Benutzeroberfläche der Sensor/Aktor Einrichtung AM einen entsprechenden Befehlszustand auslöst. Ferner wird durch die Sensor/Aktor Einrichtung AM das 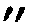 Aufweck"-Signal generiert, das der 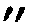 Schlaf-Modus" Steuerung MS zugeleitet wird und zum Senden auf dem Datenbus aufbereitet wird. Vorteilhaft wird gleichzeitig der Busankoppler BA mit 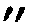 Schlaf-Modus" Energie solange versorgt, bis diese Aufgabe durch Einschaltung des Busnetzteiles SN übernommen werden kann. Der Busankoppler BA ist dadurch schneller betriebsbereit und hat sofort nach dem Einschalten der Busbetriebsspannung Zugriff auf den Datenbus. Vorteilhaft wird bei abgeschaltetem Busnetzteil SN der Mikroprozessor des Busankopplers BA durch die Energiequelle Q im Zustand einer reduzierten Betriebsbereitschaft gehalten.

Durch die eingebaute Energiequelle Q ist jeder Bus- teilnehmer BT in der Lage, ein 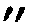 Aufweck"-Signal an das Busnetzteil SN zu senden. Selbstverständlich kann es ausreichen, wenn nur ein bevorzugter Bus-teilnehmer BT oder ein spezieller Busaktivator mit einer Batterie ausgerüstet ist, der dann stets aktiviert werden muß, um den Datenbus aus dem 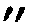 Schlaf-Modus" aufzuwecken. Ferner kann es sinnvoll sein, nur die Sensor-Busteilnehmer BT mit Batterien auszurüsten, so daß ein von einem Sensor-Gerät aufgenommenes Ereignis zum 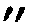 Aufwecken" des Datenbusses führt. Um ein Auswechseln der Batterien zu vermeiden, sind die Batterien aufladbar. Die Aufladung erfolgt über die Datenleitung DL vom Busnetzteil SN. Die 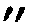 Schlaf-Modus" Steuerung MS überwacht den Ladezustand der Batterien und steuert die Aufladung während des normalen Betriebszustandes des Datenbusses.

## Patentansprüche

1. Einrichtung für einen Datenbus mit anschließbaren Busteilnehmern (BT) und einem Busnetzteil (SN) zur Erzeugung der Betriebsspannung des Datenbusses, und zur Stromversorgung der Busteilnehmer, gekennzeichnet durch folgende Komponenten,
• Mittel (BR) zum Erkennen von Betriebsruhe auf dem Datenbus,
• Mittel (AU) zum Abschalten des Busnetzteiles (SN) nach dem Erkennen der Betriebsruhe,
• Mittel zur Aufrechterhaltung einer reduzierten Betriebsbereitschaft wenigstens eines Busteilnehmers (BT) bei abgeschaltetem Busnetzteil, wobei der wenigstens eine Bus- teilnehmer (BT) an einer busnetzteilunabhängigen Energiequelle (Q) angeschlossen ist und von dieser Energiequelle (Q) gespeiste Mittel (AM) zum Erkennen einer Busteilnehmeraktivierung sowie zur Erzeugung einer 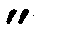 Aufweck"-Information auf der Grundlage der Aktivierungsinformation und Mittel (MS) zum Übertragen der 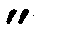 Aufweck"-Information an das Busnetzteil (SN) enthält,
• Mittel (EI) zum Einschalten des Busnetzteiles (SN) in Abhängigkeit von der 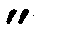 Aufweck"-Information des Busteilnehmers (BT).

2. Einrichtung nach Anspruch 1, dadurch gekennzeichnet, daß das 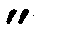 Aufweck"-Signal auf der Datenleitung (DL) des Datenbusses übertragen wird.

3. Einrichtung nach Anspruch 1 oder 2, dadurch gekennzeichnet, daß das 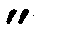 Aufweck"-Signal bei ausgeschaltetem Busnetzteil (SN) übertragen wird.

4. Einrichtung nach einem der Ansprüche 1 bis 3, dadurch gekennzeichnet, daß das 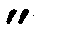 Aufweck"-Signal eine der Bus-Betriebsspannung entgegengesetzte Polarität besitzt.

5. Einrichtung nach Anspruch 1, dadurch gekennzeichnet, daß die busnetzteilunabhängige Energiequelle (Q) wieder aufladbar ist.

6. Einrichtung nach Anspruch 5, dadurch gekennzeichnet, daß Mittel (MS) zur Ladungsüberwachung und Aufladung der Energiequelle (Q) vorgesehen sind.

7. Einrichtung nach Anspruch 5 oder 6, dadurch gekennzeichnet, daß die Energiequelle (Q) von der Betriebsspannung des Datenbusses aufladbar ist.

8. Einrichtung nach einem der Ansprüche 5-7, dadurch gekennzeichnet, daß die Energiequelle (Q) im Busteilnehmer (BT) eingebaut ist.

9. Einrichtung nach einen der Ansprüche 1 bis 8, dadurch gekennzeichnet, daß eine Einrichtung (BW) zur Überwachung der Betriebsruhe auf dem Datenbus vorgesehen ist, mit der bei Empfang eines 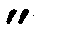 Aufweck"-Signals die Einschaltmittel (EI) des Busnetzteiles (SN) ansteuerbar sind.

10. Einrichtung nach einem der Ansprüche 1 bis 9, dadurch gekennzeichnet, daß die Mittel (BR) zum Erkennen der Betriebsruhe, die Mittel (AU) zum Abschalten des Busnetzteiles, die Mittel (EI) zum Einschalten des Busnetzteiles sowie die Überwachungseinrichtung (BW) zum Empfang des 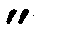 Aufweck"-Signals Bestandteile des Busnetzteiles (SN) sind.

11. Einrichtung nach einem der Ansprüche 1-10, dadurch gekennzeichnet, daß der Busteilnehmer (BT) einen Busankoppler (BA) mit Mikroprozessor (µ) enthält, der bei abgeschaltetem Busnetzteil (SN) in einem 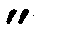 Schlaf-Modus" betrieben wird.

12. Einrichtung nach Anspruch 11, dadurch gekennzeichnet, daß der 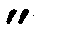 Schlaf-Modus" des Mikroprozessors (µ) durch die busnetzteilunabhängige Energiequelle (Q) aufrechterhalten wird.

13. Einrichtung nach Anspruch 11 oder 12, dadurch gekennzeichnet, daß der 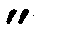 Schlaf-Modus" des Mikroprozessors (µ) durch die Aktivierungsinformation eines Busteilnehmers (BT) beendet wird.
